# EUROPÄISCHE PATENTSCHRIFT

(11) **EP 1 255 627 B1**
(45) Veröffentlichungstag und Bekanntmachung des Hinweises auf die Patenterteilung: **25.08.2004**
(21) Anmeldenummer: 01911416.4
(22) Anmeldetag: 02.02.2001
(51) Int. Cl.: B23Q 1/00

(54) **SPINDEL MIT EINEM DATENSPEICHERELEMENT**
SPINDLE COMPRISING A DATA STORAGE ELEMENT
BROCHE MUNIE D'UN ELEMENT DE STOCKAGE DE DONNEES

(30) Priorität: 17.02.2000 DE 10007126
(43) Veröffentlichungstag der Anmeldung: 13.11.2002
(73) Patentinhaber: Paul Müller GmbH & Co. KG Unternehmensbeteiligungen, 90411 Nürnberg (DE)
(72) Erfinder: MÖLLER, Bernd, 91217 Hersbruck (DE); VERLEMANN, Edgar, 90491 Nürnberg (DE)
(74) Vertreter: Lösch, Christoph
(86) Internationale Anmeldenummer: PCT/DE2001/000434
(87) Internationale Veröffentlichungsnummer: WO 2001/060562

(56) Entgegenhaltungen:
- EP-A- 0 329 944
- US-A- 5 903 462

## Beschreibung

Die Erfindung betrifft eine Spindel für eine Werkzeugmaschine mit den Merkmalen des Oberbegriffs des Patentanspruchs 1. Ferner betrifft die Erfindung ein Verfahren zum Betrieb einer Spindel für eine Werkzeugmaschine mit den Merkmalen des Oberbegriffs von Patentanspruch 9.

Als Stand der Technik sind Spindeln für Werkzeugmaschinen bekannt, wobei die Spindel zur Ansteuerung des Elektromotors und zur Erfassung der Daten der Datenerfassungselemente (Sensoren) der Spindel mit einer Maschinensteuerung der Werkzeugmaschine verbunden ist. Eine separate Erfassung oder Verarbeitung der Daten der Sensoren z.B. durch den Hersteller der Spindel ohne Eingriff in die Maschinensteuerung der Werkzeugmaschine ist nicht möglich.

Der Erfindung liegt die Aufgabe zugrunde, eine Spindel für eine Werkzeugmaschine und ein Verfahren zum Betrieb einer Spindel für eine Werkzeugmaschine anzubieten, bei denen eine separate Erfassung der Betriebs- und/oder Zustandsdaten der Spindel ohne Eingriff in die Maschinensteuerung der Werkzeugmaschine ermöglicht wird.

Die Aufgabe wird für die Spindel durch die Merkmale des kennzeichnenden Teils des Patentanspruchs 1 in Verbindung mit den Merkmalen des Oberbegriffs gelöst. Vorteilhafte Ausführungsformen der Spindel werden in den weiteren Patentansprüchen 2 - 8 beschrieben. Hinsichtlich des Verfahrens wird die Aufgabe durch die Merkmale des kennzeichnenden Teils des Patentanspruchs 9 in Verbindung mit den Merkmalen des Oberbegriffs gelöst. Vorteilhafte Verfahrensvarianten werden in den weiteren Patentansprüchen 10 - 17 beschrieben.

Im folgenden ist der Begriff "Spindel" allgemein zu verstehen und umfaßt z.B. eine Motorspindel mit einem Gehäuse zur Aufnahme eines Elektromotors sowie eine riemengetriebene Spindel mit einem externen Antriebsmotor. Ferner kann die Spindel entweder zur Werkzeugaufnahme (z.B. für Schleifmaschinen) oder zur Werkstückaufnahme (z.B. für Drehmaschinen) verwendet werden.

Bei der erfindungsgemäßen Spindel ist mindestens ein spindelintegriertes Datenspeicherelement zur Abspeicherung der aufgenommenen Daten des oder der Datenerfassungselemente (Sensoren) der Spindel vorgesehen. Dabei ist unter dem Begriff "spindelintegriert" sowohl eine Integration des Datenspeicherelements im Gehäuse der Spindel als auch eine Anbringung an der Außenseite des Gehäuses der Spindel zu verstehen.

Im Unterschied zum Stand der Technik ist das Datenspeicherelement nicht der Motorsteuerung der Werkzeugmaschine zugeordnet oder räumlich in die Motorsteuerung integriert. Bei einem Austausch der Spindel kann das Datenspeicherelement separat vom Servicepersonal, also vom Hersteller der Spindel, ausgelesen werden und es können geeignete Diagnosesysteme mit dem Datenspeicherelement verbunden werden, ohne daß ein Eingriff in die Maschinensteuerung der Werkzeugmaschine notwendig ist. Damit kann auch - falls gewünscht - ein Zugriff der Maschinensteuerung (und damit des Herstellers oder Betreibers der Werkzeugmaschine) auf das Datenspeicherelement partiell oder völlig gesperrt werden, um interne und geheime Daten, die im Zusammenhang mit der Spindel stehen, allein dem Hersteller der Spindel zugänglich zu machen. Dies kann z.B. im Zusammenhang mit Funktionsstörungen und damit verbundenen etwaigen Garantieansprüchen des Herstellers oder Betreibers der Werkzeugmaschine gegenüber dem Hersteller der Spindel von Bedeutung sein.

Vorteilhafterweise sind in der Spindel mehrere Sensoren z.B. zur Ermittlung der Temperatur der Lager und des Motors, der Winkellage, des Schwingweges, der Leckage etc. vorgesehen, welche die aufgenommenen Betriebs- und Zustandsdaten im spindelintegrierten Datenspeicherelement abspeichern. Bei laufender Spindel, bei der Reparatur oder beim Austausch der Spindel können durch Auslesen des spindelintegrierten Datenspeicherelementes Rückschlüsse auf das Betriebsverhalten der Spindel gezogen und es können die Ursachen von Funktionsstörungen ermittelt oder untersucht werden.

In einer weiteren vorteilhaften Ausführungsform besitzt die Spindel mindestens ein mit dem Datenspeicherelement verbundenes spindelintegriertes Datenverarbeitungselement zur Verarbeitung oder Aufbereitung der im Datenspeicherelement abgespeicherten Daten der Sensoren der Spindel. Damit kann die Spindel eine integrierte EDV-Einheit aufweisen, in welcher die Sensordaten digitalisiert und aufbereitet werden können. Hierbei können auch einzelne Meßgrößen verschiedener Sensoren kombiniert verarbeitet werden, so daß z.B. bei Verknüpfung von Temperaturdaten mit Drehzahldaten eine entsprechende axiale Verlagerung der Spindelwelle der Spindel als Mikrometerangabe ermitteln kann. Ferner können die Sensordaten zur Herstellung einer Datenbusstruktur aufbereitet werden.

In einer besonders vorteilhaften Ausführungsform dient das Datenverarbeitungselement zur Datenkompression der vom Datenerfassungselement aufgenommenen Daten, insbesondere von aufgenommenen Schwingungssignalen. Diese Datenkompression kann durch einen im Datenverarbeitungselement integrierten Encoder erreicht werden, wodurch die vom Datenerfassungselement aufgenommene Datenmenge reduziert wird, indem unwesentliche Anteile dieser Datenmenge vernachlässigt werden. Damit entstehen verkleinerte Datenpakete, welche über die spindelintegrierte Schnittstelle zur Datenübertragung z.B. an eine externe EDV-Station weitergeleitet werden können, wobei dort eine Frequenzanalyse der aufgenommenen Schwingungssignale stattfinden kann. Durch die Datenkompression im Datenverarbeitungselement können die aufgenommenen Schwingungssignale innerhalb einer vertretbaren kurzen Zeitdauer vom Datenverarbeitungselement an die externe EDV-Station übertragen werden.

Das Datenspeicherelement und/oder das Datenverarbeitungselement der Spindel können mit der Maschinensteuerung der Werkzeugmaschine verbunden sein, um einzelne oder eine bestimmte Anzahl gewünschter Sensordaten an die Maschinensteuerung weiterzuleiten. Dabei kann eine Weiterleitung bestimmter Sensordaten, die nur für den Hersteller der Spindel bestimmt sein sollen, unterbleiben.

Gemäß einer weiteren vorteilhaften Ausführungsform besitzt das Datenspeicherelement und/oder das Datenverarbeitungselement der Spindel eine spindelintegrierte Schnittstelle, um eine Datenübertragung, insbesondere zu einer externen EDV-Station, zu ermöglichen.

In diesem Zusammenhang ist insbesondere ein spindelintegriertes Modemelement, z.B. nach Art einer Steckkarte für Personal-Computer vorgesehen, um sich von einer externen EDV-Station (z.B. einem Personal-Computer beim Hersteller der Spindel) über einen Provider in die jeweilige Spindel einwählen zu können und eine Datenübertragung zwischen der externen EDV-Station und der Einheit aus Datenspeicherelement und/oder Datenverarbeitungselement und Modemelement möglich zu machen.

Dabei kann eine Datenübertragung zwischen Spindel und der externen EDV-Station über die spindelintegrierte Schnittstelle nach einem In-ternet-Datenprotokoll erfolgen. Die Verbindung zwischen externer EDV-Station und Spindel kann über eine Telefonleitung bei Bedarf hergestellt oder auch als Standleitung vorhanden sein. Ferner können sämtliche Leitungssysteme (z.B. auch das Stromnetz) zur Datenübertragung verwendet werden.

Gemäß einer vorteilhaften Ausführungsform kann auch bei Bedarf von der Spindel eine Datenverbindung zu einer externen EDV-Station hergestellt werden, so daß ausgehend von der Spindel durch Anwählen der IP-Adresse der externen EDV-Station eine Datenverbindung wie zwischen zwei Personal-Computern entsteht.

Bei einer Datenübertragung nach einem Internet-Datenprotokoll können ergänzend oder alternativ ein TCP/IP-Datenprotokoll (Transmission Control Protocol/Internet Protocol), ein SMTP-Datenprotokoll (Simple Mail Transfer Protocol), ein POP-Datenprotokoll ( Post Office Protocol), HTTP-Datenprotokoll (Hypertext Transfer Protocol), NNTP-Datenprotokoll (Network News Transfer Protocol) ein FTP-Datenprotokoll (File Transfer Protocol) und/oder ein WAP-Datenprotokoll (Wireless Application Protocol) verwendet werden.

Die Auswahl des jeweiligen Datenprotokolls richtet sich u.a. nach der Art und Menge der zu übertragenden Daten. Falls gewünscht ist, daß das Servicepersonal über ein Mobiltelefon bestimmte Kennwerte der Spindel aus dem Datenspeicherelement abfragen will, könnte z.B. eine Datenübertragung nach dem WAP-Datenprotokoll (Wireless Application Protocol) stattfinden.

Die spindelintegrierte Schnittstelle kann zur kabelgebundenen oder kabellosen Datenübertragung (z.B. über Funksignale, Infrarotsignale etc.) ausgebildet sein. Bei einer kabellosen Datenübertragung kann z.B. vom Servicepersonal über einen geeigneten funkgesteuerten oder infrarotgesteuerten Datenleser ein Auslesen der im spindelintegrierten Datenerfassungselement abgespeicherten Sensordaten stattfinden.

Die spindelintegrierte Schnittstelle kann z.B. als RS232/RS485-Schnittstelle ausgebildet sein, wodurch z.B. eine externe EDV-Station, die als Diagnosecomputer vom Servicepersonal vor Ort benutzt wird, mit dem spindelintegrierten Datenspeicherelement und/oder Datenerfassungselement zum Auslesen der vorliegenden Sensordaten verbunden werden kann.

Ferner kann die Schnittstelle als Datenbus-Schnittstelle z.B. zur Übertragung von Datenbus-Protokollen gemäß den Standards USB (PC), PROFI-BUS-DP, INTERBUS-S, CAN-BUS und SERCOS ausgebildet sein.

Dabei kann die spindelintegrierte Schnittstelle z.B. mit der externen EDV-Station aber auch - falls gewünscht - mit dem Maschinensteuerung der Werkzeugmaschine verbunden werden, um einen (begrenzten) Zugriff der Maschinensteuerung auf das spindelintegrierte Datenspeicherelement und/oder Datenerfassungselement zu ermöglichen. Die spindelintegrierte Schnittstelle kann eine Prüfungsfunktion besitzen und sowohl zur Datenübertragung jeweils unterschiedlicher Datenströme zur Maschinensteuerung der Werkzeugmaschine als auch z.B. zur externen EDV-Station verwendet werden.

Alternativ können auch zwei spindelintegrierte Schnittstellen vorgesehen sein, die eine als Verbindung zur Maschinensteuerung und die andere als Verbindung zur externen EDV-Station.

Insgesamt ist unter dem Begriff "externe EDV-Station" jedes technische Element bezeichnet, welches zum Empfang und/oder zum Aussenden von Daten zur Datenübertragung geeignet ist. Dies kann z.B. ein lokales EDV-Diagnosesystem des Servicepersonals, ein Mobiltelefon oder ein über Datenfernübertragung (z.B. über eine Internetverbindung). mit der Spindel verbundener Personal-Computer oder ein EDV-System des Herstellers der Spindel sein.

Beim erfindungsgemäßen Verfahren zum Betrieb einer Spindel für eine Werkzeugmaschine erfolgt über mindestens ein spindelintegriertes Datenspeicherelement eine Abspeicherung der aufgenommenen Daten eines Datenerfassungselements (Sensors) der Spindel. Zusätzlich kann ein spindelintegriertes Datenverarbeitungselement vorgesehen sein, über welches eine Verarbeitung der im Datenspeicher abgespeicherten Sensordaten erfolgt.

Eine Datenübertragung und Kommunikation zwischen der Spindel und insbesondere einer externen EDV-Station wird über eine Schnittstelle der Spindel ermöglicht, über weiche entweder ausgehend von der Spindel oder ausgehend von der externen EDV-Station eine Datenverbindung aufgebaut und aufrecht erhalten werden kann.

Gemäß einer besonders vorteilhaften Verfahrensvariante findet im Datenverarbeitungselement eine Datenkompression der vom Datenerfassungselement aufgenommenen Schwingungssignale statt, wobei sich der Datenumfang erheblich verringert und eine zügige Übertragung der verbleibenden Datenmenge über die spindelintegrierte Datenschnittstelle z.B. an eine externe EDV-Station zur Frequenzanalyse oder -überwachung stattfinden kann. Dabei kann als Datenkompressionsverfahren auf Verfahren zurückgegiffen werden, welches bereits für die Datenkompression von Audiosignalen bekannt sind(z.B. Kompressionsverfahren nach dem "MPEG 1 Part 3"-Standard).

Bei einer Abwandlung eines Kompressionsverfahrens nach "MPEG-1 Part 3"-Standard wird vorteilhafterweise das dort verwendete psychoakustische Modell zur Datenkompression, welche sich am subjektiven Höreindruck des Benutzers orientiert, durch ein anderes Kompressionsmodell ersetzt wird, z.B. durch ein maschinenakustisches Modell, ein Modell der Schwingungserzeugung oder ein Modell der Maschinendynamik.

Somit können charakteristische Frequenzen der Lagerelemente (z.B. von Kugellagern) der Spindelwellenlagerung der Spindel erfaßt, komprimiert und weiter übertragen werden. Im Zusammenhang mit der Frequenzüberwachung von Kugellagern treten z.B. Käfigumlauffrequenzen, Innen-/Außenring-Überrollfrequenzen sowie durch Modulation dieser Schwingungen verursachte Seitenbänder etc. auf. Charakteristische Frequenzen von Kugellager sind durch den konstruktiven Aufbau des Kugellagers strukturell vorgegeben und können für ein Kompressionsmodell in einem im Datenverarbeitungselement integrierten Encoder verwendet werden.

Hierdurch kann die von den Datenerfassungselementen aufgenommene Schwingungsinformation erheblich verringert werden, wodurch eine schnellere Datenübertragung über eine Datenschnittstelle der Spindel an eine externe EDV-Station, in welcher durch einen Decoder eine Dekompression der übertragenen Daten stattfinden kann.

In einem konkreten Beispiel kann beim Betrieb der erfindungsgemäßen Spindel bei einer Spindelwellendrehzahl von etwa 60.000 U/min eine Störfrequenz von etwa 8 kHz des Antriebsmotors der Spindel auftreten. Gleichzeitig können zu erfassende und zu überwachende Käfigumlauffrequenzen der Lagerelemente der Spindelwelle in der Größe von etwa 0,4 kHz auftreten. Bei einem maschinenakustischen Kompressionsmodell kann nun die unerwünschte Störfrequenz von 8 kHz unterdrückt und bei der Datenkompression im Encoder des Datenverarbeitungselements nicht berücksichtigt werden.

Generell sind beliebig vielfältige und verfeinerte Kompressionsmodelle denkbar und können an die jeweilige Spindelkonstruktion und die jeweiligen Betriebsbedingungen angepaßt werden.

Die Erfindung ist anhand eines Ausführungsbeispiels in der Zeichnungsfigur näher erläutert.

Die Zeichnungsfigur zeigt in einer schematischen Schnittdarstellung eine Spindel 9 mit einem Gehäuse 12, in dem ein Elektromotor 11 aufgenommen ist, der eine in den Lagern 14, 15 aufgenommene Welle 13 mit Werkzeug 10 antreibt.

Gemäß der Zeichnungsfigur wird die beim Betrieb entstehende Wärme im Bereich des Elektromotors 11 und der Lager 14, 15 durch die Kühlungen 16, 17 abgeführt.

Ferner ist eine Hydraulikeinheit 18 vorgesehen, welche zum Wechsel des Werkzeugs 10 aktiviert werden kann.

Die Maschinensteuerung 4 der nicht näher abgebildeten Werkzeugmaschine, in welcher die Spindel 9 aufgenommen ist, dient zur Ansteuerung z.B. eines Werkzeugwechselelements 19, eines Schmiergeräts 20, eines Umrichters 21 und eines Kühlaggregats 22, welche jeweils - wie abgebildet - u.a. mit der Hydraulikeinheit 18, dem Elektromotor 11 und den Künlungen 16, 17 in Verbindung stehen.

Schließlich weist die Spindel 9 noch Datenerfassungselemente (Sensoren) 2, z.B. Temperatur-, Schwingungs-, Winkel- oder Drehzahlsensoren etc., auf.

Derartige Datenerfassungselemente 2 sind, wie z.B. das Datenerfassungselement 2b (Drehzahlsensor), bei Spindeln nach dem Stand der Technik direkt mit der Maschinensteuerung 4, z.B. dem Umrichter 21, zur Abspeicherung der Sensordaten verbunden (nicht abgebildet).

Erfindungsgemäß sind die Daten für Datenerfassungselemente 2, hier beispielhaft abgebildet als Temperatursensor 2a und Drehzahlsensor 2b, auch oder nur mit dem spindelintegrierten Datenspeicherelement 1 verbunden.

Im Datenspeicherelement 1 werden die Sensordaten der Datenerfassungselemente 2a, 2b sowie weiterer nicht abgebildeter Datenerfassungselemente abgespeichert und - falls gewünscht - im ebenfalls spindelintegrierten Datenverarbeitungselement 3 aufbereitet oder kombiniert.

Schließlich können das Datenspeicherelement 1 und das Datenerfassungselement 2 über die Schnittstelle 5 ausgelesen werden, falls gewünscht - unter Verwendung eines ebenfalls spindelintegrierten Modemelements 7.

Über die Schnittstelle 5 kann eine Datenverbindung 24 mit einer externen EDV-Station 6 oder einem Telefonanschluß 8 hergestellt werden.

Ein Datenaustausch zwischen EDV-Station 6 und Datenspeicherelement 1 und/oder Datenerfassungselement 2 kann - wie beschrieben - nach den verschiedenen (Internet-)Datenprotokolfen erfolgen und kann kabellos (z.B. über Funk oder Infrarot etc.) oder kabelgebunden stattfinden.

Dabei kann sich die EDV-Station 6 in unmittelbarer Umgebung der Spindel 9 befinden und z.B. als Diagnose-Computer vom Servicepersonal eingesetzt werden. Ferner kann die EDV-Station 6 als Personal-Computer oder als EDV-System z.B. des Herstellers der Spindel 9 mittels Datenfernübertragung über die Datenverbindung 24 (z.B. über eine Internet-Verbindung) mit dem Datenspeicherelement 1 oder dem Datenerfassungselement 2 kommunizieren.

Erfindungsgemäß wird damit erreicht, daß die aufgenommene Daten der Datenerfassungselemente 2, also der spindelintegrierten Sensoren, separat aufgenommen und ausgelesen werden können, ohne daß ein Eingriff in die Maschinensteuerung 4 und damit eine Zustimmung des Herstellers oder des Betreibers der Werkzeugmaschine vorliegen muß.

Die Schnittstelle 5 kann auch über die Verbindung 25 mit der Motorsteuerung 4 verbunden sein, wobei über entsprechende Codierung oder sonstige Identifikation der Daten des Datenspeicherelements 1 und des Datenerfassungselements 2 bestimmt werden kann, weiche Sensordaten der Datenerfassungselemente 2 an die Maschinensteuerung 4 oder an die EDV-Station 6 weitergeleitet werden.

Insgesamt wird es durch die erfindungsgemäße Spindel 9 ermöglicht, spindelinterne aufgenommene Sensordaten der Datenerfassungselemente 2 wahlweise spindelintern im Datenspeicherelement 1 aufzunehmen (z.B. zur Weiterverarbeitung im Datenverarbeitungselement 3) oder an die Maschinensteuerung 4 weiterzuleiten.

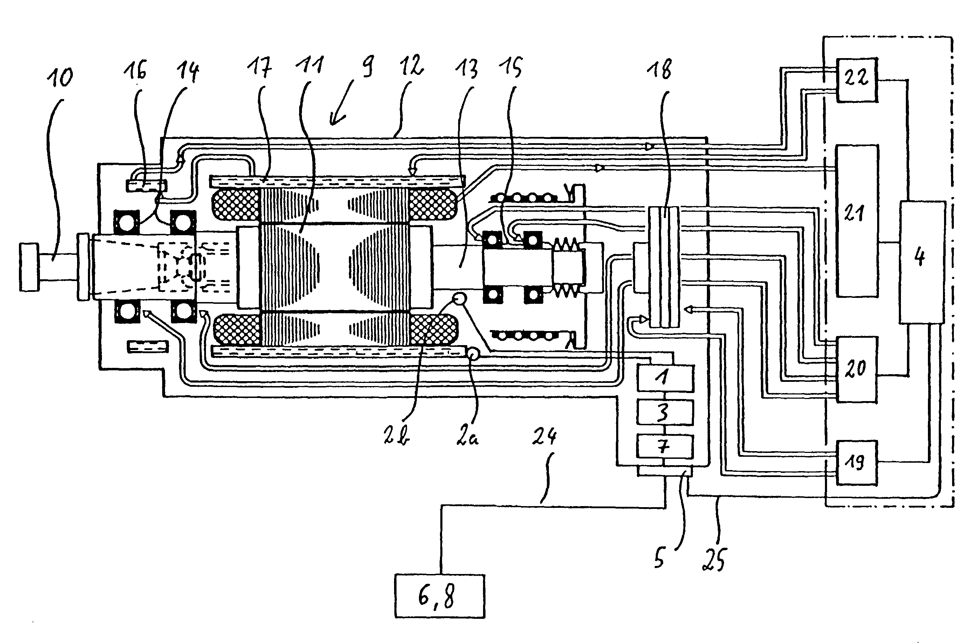

## Patentansprüche

1. Spindel (9) für eine Werkzeugmaschine, insbesondere Motorspindel mit einem Gehäuse (12) zur Aufnahme eines Elektromotors (11) und einer von diesem antreibbaren Welle (13), insbesondere mit einer Werkzeugaufnahme für ein Werkzeug (10) zur Werkstückbearbeitung, wobei mindestens ein Datenerfassungselement (2a,2b) zur Aufnahme von Betriebsund/oder Zustandsdaten der Spindel vorgesehen ist,
**dadurch gekennzeichnet, daß** mindestens ein spindelintegriertes Datenspeicherelement (1) zur Abspeicherung der aufgenommenen Daten des Datenerfassungselements (2a,2b) vorgesehen ist.

2. Spindel nach Anspruch 1,
**dadurch gekennzeichnet, daß** mindestens ein mit dem Datenspeicherelement (1) verbundenes spindelintegriertes Datenverarbeitungselement (3) vorgesehen ist.

3. Spindel nach Anspruch 2,
**dadurch gekennzeichnet, daß** das Datenverarbeitungselement (3) zur Datenkompression aufgenommener Daten des Datenerfassungselements (2a, 2b) vorgesehen ist.

4. Spindel nach einem der Ansprüche 1 - 3,
**dadurch gekennzeichnet, daß** das Datenspeicherelement (1) und/oder das Datenverarbeitungselement (3) mit einer Maschinensteuerung (4) der Werkzeugmaschine zur Datenübertragung verbunden ist.

5. Spindel nach einem der Ansprüche 1 - 4,
**dadurch gekennzeichnet, daß** das Datenspeicherelement (1) und/oder das Datenverarbeitungselement (3) mindestens eine spindelintegrierte Schnittstelle (5) zur Datenübertragung, insbesondere zu einer externen EDV-Station (6), aufweist.

6. Spindel nach einem der Ansprüche 1 - 5,
**dadurch gekennzeichnet, daß** ein spindelintegriertes Modemelement (7) zur Herstellung einer Datenverbindung, insbesondere zu einem Telefonanschluß (8), vorgesehen ist.

7. Spindel nach einem der Ansprüche 5 oder 6,
**dadurch gekennzeichnet, daß** die Schnittstelle (5) zur Datenübertragung nach einem Internet-Datenprotokoll vorgesehen ist.

8. Spindel nach Anspruch 7,
**dadurch gekennzeichnet, daß** das Datenspeicherelement (1) und/oder das Datenverarbeitungselement (3) eine zugewiesene IP-Adresse besitzt.

9. Verfahren zum Betrieb einer Spindel, insbesondere einer Maschinenpindel für eine Werkzeugmaschine, mit einem Gehäuse zur Aufnahme eines Elektromotors und einer von diesem antreibbaren Welle, insbesondere mit einer Werkzeugaufnahme für ein Werkzeug zur Werkstückbearbeitung, wobei mindestens ein Datenerfassungselement zur Aufnahme von Betriebs- und/oder Zustandsdaten der Spindel vorgesehen ist, insbesondere Verfahren zum Betrieb einer Spindel nach einem der Ansprüche 1 - 8,
**dadurch gekennzeichnet, daß** über mindestens ein spindelintegriertes Datenspeicherelement eine Abspeicherung der aufgenommenen Daten des Datenerfassungselements erfolgt.

10. Verfahren nach Anspruch 9,
**dadurch gekennzeichnet, daß** eine Verarbeitung der im Datenspeicher abgespeicherten Daten in einem spindelintegrierten Datenverarbeitungselement erfolgt.

11. Verfahren nach einem der Ansprüche 9 oder 10,
**dadurch gekennzeichnet, daß** über eine Schnittstelle des Datenspeicherelements und/oder Datenverarbeitungselements eine Datenübertragung mit einer externen EDV-Station erfolgt.

12. Verfahren nach einem der Ansprüche 9 - 11,
**dadurch gekennzeichnet, daß** über das Datenspeicherelement und/oder das Datenverarbeitungselement eine Selbstdiagnose der Spindel erfolgt.

13. Verfahren nach einem der Ansprüche 11 oder 12,
**dadurch gekennzeichnet, daß** über die Schnittstelle z.B. im Fall einer Funktionsstörung Datensignale von der Spindel an die externe EDV-Station übertragen werden.

14. Verfahren nach einem der Ansprüche 11-13,
**dadurch gekennzeichnet, daß** von der externen EDV-Station Zustands- und/oder Betriebsdaten der Spindel mittels Datenübertragung abgefragt werden.

15. Verfahren nach einem der Ansprüche 10 - 14,
**dadurch gekennzeichnet, daß** im Datenverarbeitungselement eine Datenkompression der vom Datenerfassungselement aufgenommenen Daten erfolgt.

16. Verfahren nach Anspruch 15,
**dadurch gekennzeichnet, daß** die Datenkompression durch insbesondere zur Datenkompression von aufgenommenen Schwingungssignalen geeignete Datenkompressionsverfahren erfolgt.

17. Verfahren nach Anspruch 16,
**dadurch gekennzeichnet, daß** eine Datenkompression durch ein Datenkompressionsverfahren nach dem "MEPG-1 Part 3" Standard oder einem vergleichbaren Kompressionsverfahren erfolgt.

## Claims

1. A spindle (9) for a machine tool, in particular a motor spindle having a housing (12) to accommodate an electric motor (11) and a shaft (13) driven by the latter, in particular having a tool holder for a tool (10) for machining workpieces, at least one data acquisition element (2a, 2b) being provided to record operating and/or state data of the spindle, wherein at least one spindle-integrated data storage element (1) is provided to store the recorded data from the data acquisition element (2a, 2b).

2. The spindle as claimed in claim 1, wherein at least one spindle-integrated data processing element (3) connected to the data storage element (1) is provided.

3. The spindle as claimed in claim 2, wherein the data processing element (3) is provided for the data compression of recorded data from the data acquisition element (2a, 2b).

4. The spindle as claimed in one of claims 1-3, wherein the data storage element (1) and/or the data processing element (3) is/are connected to a machine control system (4) of the machine tool for the purpose of data transmission.

5. The spindle as claimed in one of claims 1-4, wherein the data storage element (1) and/or the data processing element (3) has/have at least one spindle-integrated interface (5) for data transmission, in particular to an external EDP station (6).

6. The spindle as claimed in one of claims 1-5, wherein a spindle-integrated modem element (7) is provided to produce a data connection, in particular to a telephone connection (8).

7. The spindle as claimed in either of claims 5 and 6, wherein the interface (5) is provided for data transmission in accordance with an Internet data protocol.

8. The spindle as claimed in claims 7, wherein the data storage element (1) and/or the data processing element (3) has an allocated IP address.

9. A method of operating a spindle, in particular a machine spindle for a machine tool, having a housing to accommodate an electric motor and a shaft driven by the latter, in particular having a tool holder for a tool for machining workpieces, at least one data acquisition element being provided to record operating and/or state data of the spindle, in particular a method of operating a spindle as claimed in one of claims 1-8, wherein the recorded data from the data acquisition element is stored by at least one spindle-integrated data storage element.

10. The method as claimed in claim 9, wherein the data stored in the data memory is processed in a spindle-integrated data processing element.

11. The method as claimed in either of claims 9 and 10, wherein data transmission to an external EDP station is carried out via an interface of the data storage element and/or data processing element.

12. The method as claimed in one of claims 9-11, wherein self-diagnosis of the spindle is carried out via the data storage element and/or the data processing element.

13. The method as claimed in either of claims 11 and 12, wherein data signals are transmitted from the spindle to the external EDP station via the interface, for example in the event of a functional disruption.

14. The method as claimed in one of claims 11-13, wherein state and/or operating data of the spindle are interrogated by the external EDP station by means of data transmission.

15. The method as claimed in one of claims 10-14, wherein data compression of the data recorded by the data acquisition element is carried out in the data processing element.

16. The method as claimed in claim 15, wherein the data compression is carried out by data compression methods which are suitable in particular for the data compression of recorded vibration signals.

17. The method as claimed in claim 16, wherein data compression is carried out by a data compression method according to the "MPEG 1 Part 3" Standard or a comparable compression method.

## Revendications

1. Broche (9) pour une machine-outil, notamment broche motorisée comportant un boîtier (12) pour recevoir un moteur électrique (11) et un arbre (13) qui peut être entraîné par celui-ci, comportant notamment un attachement d'outil pour un outil (10) en vue de l'usinage d'une pièce, au moins un élément d'acquisition de données (2a, 2b) étant prévu pour la collecte de données de fonctionnement et/ou d'état de la broche, **caractérisée en ce qu'**il est prévu au moins un élément de stockage de données (1) intégré dans la broche pour mémoriser les données collectées par l'élément d'acquisition de données (2a, 2b).

2. Broche selon la revendication 1, **caractérisée en ce qu'**il est prévu au moins un élément de traitement de données (3) intégré dans la broche et relié avec l'élément de stockage de données (1).

3. Broche selon la revendication 2, **caractérisée en ce que** l'élément de traitement de données (3) est prévu pour la compression des données collectées de l'élément d'acquisition de données (2a, 2b).

4. Broche selon l'une des revendications 1 à 3, **caractérisée en ce que** l'élément de stockage de données (1) et/ou l'élément de traitement de données (3) est relié avec une commande de machine (4) de la machine-outil pour la transmission de données.

5. Broche selon l'une des revendications 1 à 4, **caractérisée en ce que** l'élément de stockage de données (1) et/ou l'élément de traitement de données (3) présente au moins une interface (5) intégrée dans la broche pour la transmission de données, notamment vers un poste informatique externe (6).

6. Broche selon l'une des revendications 1 à 5, **caractérisée en ce qu'**il est prévu un élément modem (7) intégré dans la broche pour établir une liaison de données, notamment avec une prise téléphonique (8).

7. Broche selon l'une des revendications 5 ou 6, **caractérisée en ce que** l'interface (5) de transmission de données est prévue selon un protocole de données Internet.

8. Broche selon la revendication 7, **caractérisée en ce que** l'élément de stockage de données (1) et/ou l'élément de traitement de données (3) possède une adresse IP allouée.

9. Procédé pour faire fonctionner une broche, notamment une broche de machine pour une machine-outil, comportant un boîtier pour recevoir un moteur électrique et un arbre qui peut être entraîné par celui-ci, comportant notamment un attachement d'outil pour un outil en vue de l'usinage d'une pièce, au moins un élément d'acquisition de données étant prévu pour la collecte de données de fonctionnement et/ou d'état de la broche, notamment procédé pour faire fonctionner une broche selon l'une des revendications 1 à 8, **caractérisé en ce qu'**une mémorisation des données collectées de l'élément d'acquisition de données s'effectue par le biais d'au moins un élément de stockage de données intégré dans la broche.

10. Procédé selon la revendication 9, **caractérisé en ce qu'**un traitement des données mémorisées dans la mémoire de données est effectué dans un élément de traitement de données intégré dans la broche.

11. Procédé selon l'une des revendications 9 ou 10, **caractérisé en ce qu'**une transmission de données avec un poste informatique externe s'effectue par le biais d'une interface de l'élément de stockage de données et/ou l'élément de traitement de données.

12. Procédé selon l'une des revendications 9 à 11, **caractérisé en ce qu'**un auto-diagnostic de la broche est effectué par le biais de l'élément de stockage de données et/ou l'élément de traitement de données.

13. Procédé selon l'une des revendications 11 ou 12, **caractérisé en ce que** des signaux de données sont transmis de la broche au poste informatique externe par le biais de l'interface, par exemple en cas de défaut.

14. Procédé selon l'une des revendications 11 à 13, **caractérisé en ce que** les données d'état et/ou de fonctionnement de la broche sont interrogées par le poste informatique externe au moyen d'une transmission des données.

15. Procédé selon l'une des revendications 10 à 14, **caractérisé en ce qu'**une compression des données collectées par l'élément d'acquisition de données est effectuée dans l'élément de traitement de données.

16. Procédé selon la revendication 15, **caractérisé en ce que** la compression des données s'effectue par un procédé de compression de données particulièrement adapté à la compression des données des signaux d'oscillation collectés.

17. Procédé selon la revendication 16, **caractérisé en ce qu'**une compression des données est effectuée par un procédé de compression des données selon la norme «MPEG-1 Partie 3 » ou un procédé de compression comparable.
